# EUROPEAN PATENT APPLICATION

(11) **EP 4 414 978 A1**
(43) Date of publication of application: **14.08.2024**
(21) Application number: 24155089.6
(22) Date of filing: 31.01.2024
(51) Int. Cl.: G10L 17/00, G10L 21/02, H04R 25/00, H04R 1/10, G06F 40/58

(54) **METHODS AND SYSTEMS FOR ENHANCED PEER-TO-PEER VOICE COMMUNICATION**

(30) Priority: 09.02.2023 US 202318166726
(71) Applicant: T-Mobile USA, Inc., Bellevue, WA 98006-1350 (US)
(72) Inventor: YOUNGE, Mark L., Bellevue, WA 98006-1350 (US)
(74) Representative: Suddaby, Mark Edward

(57) **Abstract**

Methods and systems for enhanced peer-to-peer voice conversation are disclosed. According to an implementation, a first device worn by a first user may detect a voice signal in an environment. The voice signal may be associated with a second user. The first device may initiate a request for establishing a communication channel between the first device and a second device worn by the second user. Upon receiving an acknowledging signal from the second device, the first device may establish the communication channel between the first device and the second device though a Bluetooth connection, a Wi-Fi connection, a 5G connection, etc. The first device may receive a subsequent voice signal on the communication channel. The first device may amplify a strength of the subsequent voice signal on certain frequencies; perform noise cancellation in the subsequent voice signal; and play the subsequent voice signal to the first user.

## Description

### BACKGROUND

In many naturally noisy environments such as restaurants, bars, and factories, it may be difficult to establish and carry on an audible conversation. People may have to raise their voices to talk to each other in the noisy environment. This is especially hard for people with hearing difficulties. Devices and techniques that can assist with the audible conversations in the noisy environment are desired.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 illustrates an example network scenario, in which methods for enhanced peer-to-peer voice conversation are implemented, according to an example of the present disclosure.
FIG. 2 illustrates an example device, in which methods for enhanced peer-to-peer voice conversation are implemented, according to an example of the present disclosure.
FIG. 3 illustrates an example flowchart of the process for implementing an enhanced peer-to-peer voice conversation, according to an example of the present disclosure.
FIG. 4 illustrates an example flowchart of the process for implementing an enhanced peer-to-peer voice conversation, according to another example of the present disclosure.
FIG. 5 illustrates an example flowchart of the process for implementing an enhanced peer-to-peer voice conversation, according to yet another example of the present disclosure.
FIG. 6 illustrates an example computing device, in which methods for enhanced peer-to-peer voice conversation are implemented, according to an example of the present disclosure.

### DETAILED DESCRIPTION

Techniques for enhanced peer-to-peer voice conversation are disclosed herein. In some implementations, a method for enhanced peer-to-peer voice conversation may be implemented on a wearable device, a user equipment (UE), or a combination of the wearable device and the UE. The UE may be any device that can wirelessly connect to a telecommunication network. In some examples, the UE may be a mobile phone, such as a smart phone or other cellular phone. In other examples, the UE may be a personal digital assistant (PDA), a media player, a tablet computer, a gaming device, a smart watch, a hotspot, a personal computer (PC) such as a laptop, desktop, or workstation, or any other type of computing or communication device. In yet other examples, the UE may include the computing devices implemented on the vehicle including but are not limited to, an autonomous vehicle, a self-driving vehicle, or a traditional vehicle capable of connecting to internet. In yet other examples, the UE may be a wearable device and/or wearable materials, such as a smart watch, smart glasses, clothes made of smart fabric, etc. In further examples, the UE may be a virtual reality or augmented reality goggles or glasses. The UE may support various radio access technologies such as Bluetooth, Wi-Fi, UWB, Zigbee, GSM, CDMA, WCDMA, UMTS, 4G/LTE or 5G new radio (NR).

As discussed herein, the wearable device may be an electronic device that is worn over, on, or in the ears. For example, the wearable device may include any types of hearing devices. In other examples, the wearable device may include a watch or a pair of glasses implemented with the digital signal processing and machine learning modules. In yet other examples, the wearable device may an electronic device integrated into wearable materials such as a hat, a scarf, earmuffs, clothes, etc. The wearable device may be configured to connect to the UE via the various radio access technologies described above.

In implementations, a first device worn by a first user may detect a sound/voice signal in an environment. The sound/voice signal may be associated with a second user. The first device may initiate a request for establishing a communication channel between the first device and a second device worn by the second user. Upon receiving an acknowledging signal from the second device, the first device may establish the communication channel between the first device and the second device though a Bluetooth connection, a Wi-Fi connection, a 5G connection, etc.

In implementations, the first device may determine whether the second user is a known contact of the first user. The first device may input the sound/voice signal to a machine learning model trained to perform voice recognition, and receive an output from the machine learning model, the output indicating the sound/voice signal being generated by the known contact. In some examples, the machine learning model may be trained using recorded voice conversations associated with the first user. The machine learning model may be trained to learn the speech patterns of the speakers, such as the speed of the speech, the frequency of the speech, the pitch of the speech, a particular accent of the speech, etc.

In implementations, the first device may send an instruction to a first mobile device associated with the first device. The first mobile device may further send the request for establishing the communication channel to the second device. Upon receiving the acknowledging signal from the second device, the first mobile device may establish the communication channel between the first device and the second device through the first mobile device. In some examples, the first mobile device may act as a communication hub for the peer-to-peer voice conversation. The first mobile device may be connected to the first device and the second device through the Bluetooth connection or other radio access technologies.

In implementations, the first device may receive a subsequent sound/voice signal generated by the second user on the communication channel. The first device may determine a direction of a subsequent sound/voice signal; amplify, based at least in part on the direction, a strength of the subsequent sound/voice signal; perform noise cancellation in the subsequent sound/voice signal; and play the subsequent sound/voice signal to the first user.

In implementations, the first device may determine that the subsequent sound/voice signal uses a language different from a preset language in the first device; and translate the subsequent sound/voice signal using the preset language. The first device may use speech synthesis techniques to generate a speech in the preset language based on the translation and play the speech to the first user.

In implementations, the first device may further receive a request to join the peer-to-peer voice conversation from a third user. If the request to join the peer-to-peer voice conversation is agreed by both the first user and the second user, the first device may include a third device into the communication channel. In some examples, a peer-to-peer voice conversation app may be installed on the first mobile device. The request to join the peer-to-peer voice conversation may be synchronized to the peer-to-peer voice conversation app. The third device may join the communication channel by pairing the third device to the first mobile device, e.g., the hub, using Bluetooth or other radio access technologies.

The present disclosure may use two or more devices equipped with integrated noise canceling directional speakers and microphones. The two or more devices may be connected together via wireless connection/network (e.g., Bluetooth, Wi-Fi, 5G, etc.) to establish a private communication channel. In implementations, a communication hub (e.g., a Bluetooth hub, a Wi-Fi hub, etc.) may be established to allow multiple devices to join the private communication channel. A peer-to-peer voice conversation app may be installed on the mobile device to control the peer-to-peer voice conversation. In some examples, language translation may be implemented in real-time to facilitate the communication. The present disclosure may also incorporate artificial intelligence (AI)/machine learning (ML) technologies into the devices that can further improve noise cancellation. The devices may be trained to automatically recognize various user speech characteristics for better communication and privacy.

The techniques discussed herein may be implemented in a computer network using one or more of protocols including but are not limited to Ethernet, 3G, 4G, 4G LTE, 5G, 6G, the further radio access technologies, or any combination thereof. In some examples, the network implementations may support standalone architectures, non-standalone architectures, dual connectivity, carrier aggregation, etc. Example implementations are provided below with reference to the following figures.

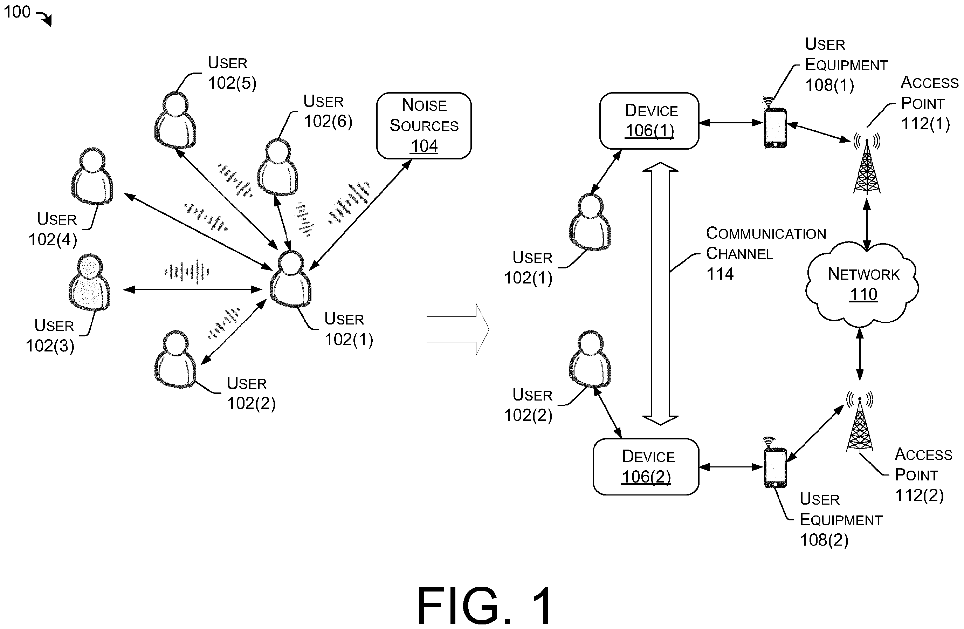

FIG. 1 illustrates an example network scenario 100, in which methods for enhanced peer-to-peer voice conversation are implemented according to an example of the present disclosure.

The network scenario 100, as illustrated in FIG. 1, may include a telecommunication network of a wireless service provider such as, T-Mobile, AT&T, Verizon Wireless, etc. The telecommunication network may include one or more core networks and one or more access networks or access points.

The core network may be referred to as a backbone network of the telecommunication network. The network 110, as an example of the core network, may include a Fifth Generation (5G) core network for 5G radio access technology, an evolved packet core (EPC) network for a Fourth Generation (4G) or a Long Term Evolution (LTE) radio access technology, etc.

The one or more access networks or access points may be compatible with one or more radio access technologies, protocols, and/or standards, such as 5G new radio (NR) technology, LTE/LTE Advanced/LTE Pro technology, other 4G technology, High-Speed Data Packet Access (HSDPA)/Evolved High-Speed Packet Access (HSPA+) technology, Universal Mobile Telecommunication System (UMTS) technology, Code Division Multiple Access (CDMA) technology, Global System for Mobile Communications (GSM) technology, WiMAX technology, Wi-Fi technology, and/or any other previous or future generation of radio access technology. The access points 112(1) and 112(2) (hereafter referred to as access point 112), as illustrated in FIG. 1, may include a base station associated with a 5G radio access network (RAN), also referred to as a gNB, a base station associated with a 4G/LTE RAN, also referred to as an eNB, base stations associated with other radio access networks, such as, 2G base stations and/or 3G NodeBs that are associated with GSM and CDMA access networks, etc.

Although not shown in FIG. 1, in some examples, the one or more access networks may include a digital subscriber line (DSL) and variations of DSL technology that provide access to desktops, workstations, and/or mainframes. In other examples, the one or more access networks may be compatible with short range wireless communication technologies, such as, Wi-Fi, Bluetooth, ultra-wideband (UWB), Zigbee, etc.

A user equipment (UE) 108(1) and 108(2) (hereafter referred to as UE 108) may connect to the telecommunication network through the respective access points. The UE 108 may support various radio access technologies (RATs) such as Bluetooth, UWB, Zigbee, Wi-Fi, GSM, CDMA, WCDMA, UMTS, 4G/LTE, 5G NR, etc. As illustrated in FIG. 1, the UE 108(1) may be associated with a user 102(1) wearing a device 106(1) and the UE 108(2) may be associated with a user 102(2) wearing a device 106(2). In some examples, the device 106(1) or 106(2) (hereinafter referred to as the device 106) may be paired to one or more of the UE 108(1), the UE 108(2), or any other UEs within the transmission range. In other examples, two devices may be paired to each other through Bluetooth connections or other short range communication technologies. In yet other examples, the device 106 may be connected to another device, the UE 108 and/or other electronic devices through UWB, Zigbee, Wi-Fi, GSM, CDMA, WCDMA, UMTS, 4G/LTE, 5G NR, etc.

As discussed herein, the device 106 may be an electronic device integrated with at least a processor, a microphone/ microphone array, a speaker, a digital signal processing (DSP) module and a machine learning module. In some examples, the device 106 may also include a communication module configured to establish a wireless channel for the device 106 to communicate with other devices.

In some examples, the device 106 may be worn over, on, or in the ears of the user such as a hearing device, a headphone, an ear bud, a bone conduction headphone, etc. In other examples, the device 106 may be integrated into a watch, a pair of glasses, etc. In yet other examples, the device 106 may be integrated into wearable fabric such as a hat, a scarf, clothes, earmuffs, etc.

The UE 108 may be any device that can wirelessly connect to the telecommunication network. In some examples, the UE 108 may be a mobile phone, such as a smart phone or other cellular phone. In other examples, the UE 108 may be a personal digital assistant (PDA), a media player, a tablet computer, a gaming device, a smart watch, a hotspot, a personal computer (PC) such as a laptop, desktop, or workstation, or any other type of computing or communication device.

In an environment such as a bar, a restaurant, a stadium, where a large amount of people are present, audible conversations are often difficult to carry on due to the ambient noise in the environment. As shown in FIG. 1, the user 102(1) who attempts to talk to the user 102(2) may accidently hear the utterance from the users 102(3), 102(4), 102(5) and 102(6). In addition, the conversation between the user 102(1) and 102(2) may also be submerged in the noise from various noise sources 104. To improve the quality of conversation and protect the privacy, the present disclosure utilizes the device 106 and the UE 108 to establish a peer-to-peer communication channel (e.g., the communication channel 114) among two or more users over the network 110.

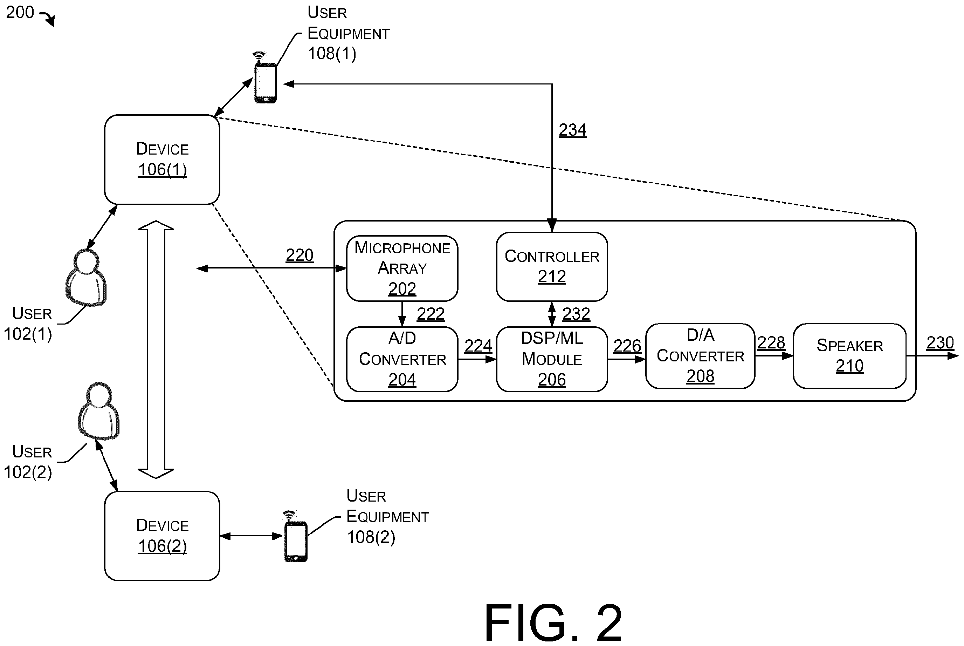

FIG. 2 illustrates an example device 200, in which methods for enhanced peer-to-peer voice conversation are implemented according to an example of the present disclosure.

The example device 200 may correspond to any of the devices 106(1) and 106(2) shown in FIG. 1. As illustrated in FIG. 2, the device 106(1) may include a microphone array 202, an analog-to-digital (A/D) converter 204, a digital signal processing/machine learning (DSP/ML) module 206, a digital-to-analog (D/A) converter 208, a speaker 210, and a controller 212.

The microphone array 202 may be configured to collect the sound/voice signal 220 in the environment and transform the vibration of the sound/voice signal 220 into an electric signal 222. In some examples, the microphone array 202 may be configured to locate a sound/voice source in an environment. As discussed herein, the microphone array 202 may determine a direction and distance of the sound/voice source from the microphone array 202 based at least in part on a time difference of arrival (TDOA) technique. In some examples, the microphone array 202 may be further configured to extract the sound/voice signal 220 from the ambient noise using beamforming. For instance, the microphone array 202 may form a beam in an expected direction of the sound/voice and collect the sound/voice only from the beam. By doing so, the microphone array 202 may also simultaneously suppress the background noise effectively. In yet other examples, the microphone array 202 may be further configured to eliminate the reverberation in the environment with the assistant of machine learning or deep learning techniques.

The microphone array 202 may include a plurality of omnidirectional microphones, directional microphones, or a combination of the omnidirectional and directional microphones. In some examples, the microphone array 202 may be a linear microphone array such as, an additive microphone array (AMA) or a differential microphone array (DMA), a planar microphone array, or a 3D microphone array. In implementations, the microphone array 202 of the device 106(1) may use the linear microphone array such as, 2 MIC DMA, 8 MIC DMA, 16 MIC DMA, etc.

As discussed herein, the electric signal 222 outputted from the microphone array 202 may be an analog signal. The electric signal 222 may be converted at the A/D converter 204 to a digital signal 224, which is further fed to the DSP/ML module 206 for processing.

The DSP/ML module 206 may be configured to perform one or more signal processing functions on the received digital signal 224. For instance, the DSP/ML module 206 may amplify the strength of the digital signal 224. In some examples, he DSP/ML module 206 may amplify the digital signal 224 at certain frequencies that are indicative of the sound/voice signal. In another example, the DSP/NΠ, module 206 may perform noise cancellation on the digital signal 224. In some examples, the DSP/ML module 206 may identify the frequencies that have the higher levels of background noise and subtract those bands from the digital signal 224. In implementations, the DSP/ML module 206 may use various filters such as a low-pass filer, a high-pass filter, a band-pass filter, etc., to filter the noise from the digital signal 224.

In some examples, the DSP/ML module 206 may use a first machine learning module to cancel the noise from the digital signal 224. The first machine learning module may be trained using training data comprised of the combinations of clean speech signals and noisy signals in various environments. The noise signals, for example, may include sounds from loud chatters, air conditioning, typing, dogs barking, traffic sound, music, etc. The training data may be labeled based at least in part on the variety of noise signals. The first machine learning module may be trained to learn various patterns of the ambient noise. In examples, the first machine learning module may be trained in a remote computing device and downloaded to the device 106(1) for use.

In some examples, the DSP/ML module 206 may use a second machine learning module to perform voice recognition on the digital signal 224. The second machine learning module may be trained to determine who is the speaker by evaluating the speaker's voice biometrics, including frequency and flow of pitch, natural accent, etc. The training data may be labeled based at least in part on the characteristics of the voice data. The second machine learning module may be trained using the voice conversation records associated with the user 102(1). In implementations, with the second machine learning module, the DSP/NΠ, module 206 may associate the speaker's profile with the contacts of the user 102(1). When a voice signal is captured by the microphone array 202, the DSP/ML module 206 may determine whether the voice signal is generated by a known contact of the user 102(1). Similar to the first machine learning module trained for noise cancellation, the second machine learning module trained for voice recognition may also be trained in a remote computing device and downloaded to the device 106(1) for use.

As discussed herein, the first machine learning module trained for noise cancellation and the second machine learning module trained for voice recognition may be trained using various machine learning techniques including but not limited to, neural networks, deep learning, linear regression, polynomial regression, logistic regression, random forests, boosting, nearest neighbors, etc. In some examples, the first machine learning module and the second machine learning module may be generated using different machine learning techniques.

The DSP/ML module 206 may output the processed digital signal 226 to the D/A converter 208. At the D/A converter 228, the processed digital signal 226 may be converted back to an analog signal 228. The analog signal 228 may be further sent to the speaker 210 to be transformed back to a sound/voice signal 230. The speaker 210 may play the sound/voice signal 230 to the user 102(1). In some examples, the speaker 210 may be configured to be a directional speaker that emit the sound/voice signal 230 in a narrow beam.

In some examples, the device 106(1) may further include a controller 212 configured to establish a communication channel between two devices for a peer-to-peer conversation. In some examples, upon determining that the sound/voice signal 220 is generated by a known contact of the user 102(1), the DSP/ML module 206 may generate a first signal 232 to the controller 212 to suggest a peer-to-peer conversation. The first signal 232 may cause the controller 212 to send a second signal 234 suggesting a peer-to-peer conversation to the UE 108(1) associated with the user 102(1). In some examples, the second signal 234 may further include information associated with the speaker that generates the sound/voice signal.

As discussed herein, a peer-to-peer communication app may be implemented on the UE 108(1). The device 106(1) may be paired with the peer-to-peer communication app through a Bluetooth connection. Receiving the second signal 234 may activate the peer-to-peer communication app at the UE 108(1) and display a message on an interface of the peer-to-peer communication app. In some examples, the user 102(1) may operate on the interface to accept the suggestion, causing the UE 108(1) to generate a request for pairing with the device associated with speaker, e.g., the device 106(2) associated with the user 102(2). When the UE 108(1) receives an acknowledgement signal from the device 106(2), the UE108(1) may connect to the device 106(1) and the device 106(2) through Bluetooth connections. In some examples, the UE 108(1) may automatically search for the device associated with the speaker within the communication range. Once the device is found, the UE 108(1) may connect to the device 106(1) and the device 106(2) through Bluetooth connections. With the UE 108(1) acting as a communication hub, a communication channel may be established between the device 106(1) and the device 106(2) for a peer-to-peer voice conversation between the user 102(1) and the user 102(2).

It should be understood that the elements of FIG. 2 are for illustrative purposes. The present disclosure is not intended to be limiting. Any user equipment may be configured as a hub for the peer-to-peer voice conversation. Further, although the functions of the device 106(1) are shown as being performed by individual elements, those functions may be integrated to fewer elements. For instance, the microphone array 202 may also implement deep learning modules for voice recognition and/or noise cancellation. Therefore, the microphone array 202 may be integrated with the DSP/ML module 206 as a single processing module.

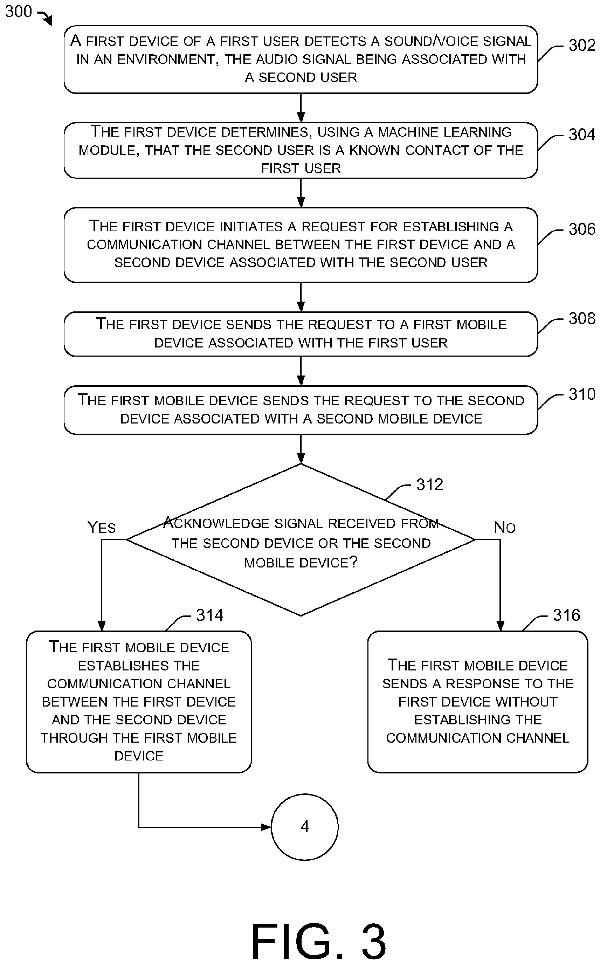

FIG. 3 illustrates an example flowchart 300 for implementing an enhanced peer-to-peer voice conversation according to an example of the present disclosure. The example flowchart 300 may correspond to a scenario, in which, based on the speaker's information, the device determines to establish a communication channel to facilitate a peer-to-peer voice conversation.

At operation 302, a first device of a first user may detect a sound/voice signal in an environment, the sound/voice signal being associated with a second user. The first device may correspond to any of the device 106(1) and 106(2), as shown in FIG. 1 and FIG. 2. The operation 302 may be performed by a microphone array of the first device, e.g., the microphone array 202, as shown in FIG. 2.

As discussed herein, the sound/voice signal may be sound waves generated by the second user when he/she speaks. The environment may also have various sound sources that produce other sound waves. Those waves that have frequencies lying in an average range of 16 Hz to 20,000 Hz may be audible to human beings. In implementations, the first device may be a wearable device, or an electronic device integrated in wearable materials. For instance, the first device may be a hearing device worn over, on or in the ears. In another example, the first device may be a watch or a pair of glasses equipped with a processor, a DSP module, a machine learning module, and a communication module. In yet other examples, the first device may be integrated in a hat, a scarf, clothes, etc.

In implementations, the operation 302 may further include transforming the sound/voice signal, i.e., the sound waves, to an electric signal for processing.

At operation 304, the first device may determine, using a machine learning module, that the second user is a known contact of the first user. The operation 304 may be performed by a processing module of the first device, where the processing module is integrated with a machine learning module. For instance, the operation 304 may be performed by the DSP/ML module 206, as shown in FIG. 2. In other examples, the operation 304 may be performed by the microphone array 202, as shown in FIG. 2.

In some examples, the machine learning module may be trained to recognize the speaker associated with the sound/voice signal based at least in part on the recorded voice conversations with the first user. The machine learning module may generate speech patterns or speech profiles that correspond to known contacts of the first users, respectively. In some examples, the speech patterns or speech profiles may indicate the speed of the speech, the frequency of the speech, the pitch of the speech, phonation, a particular accent, and/or tone, etc. The machine learning module may be pre-trained in a remote computing device and downloaded to the first device for use. In examples, the machine learning module may be periodically updated based on newly collected voice conversation data.

In implementations, the first device may extract the characteristics of the sound/voice signal. When the characteristics of the sound/voice signal matches one of the speech patterns or speech profiles, the first device may determine that the speaker is known to the first user. When there is no match between the characteristics of the sound/voice signal and the speech patterns or speech profiles, the first device may determine that the speaker is an unknown person.

Although not described herein, the example flowchart 300 may include an A/D converting operation to convert the electric signal, generally an analog signal, to a digital signal, for processing prior to the operation 304. In examples, the A/D converting function may be performed by an A/D converter (e.g., the A/D converter 204 shown in FIG. 2) or integrated to the DSP/ML module 206 of FIG. 2.

At operation 306, the first device may initiate a request for establishing a communication channel between the first device and a second device associated with the second user. The operation 306 may be performed by a controller of the first device, for example, the controller 212 of the device 106(1), as shown in FIG. 2.

As discussed herein, the first device may be capable of connecting to other computing device using any radio access technologies. For examples, the first device may be connected to a first mobile device of the first user through a Bluetooth connection. In another examples, the first device may be connected to the first mobile device of the first user through a Wi-Fi connection. The first device may generate a request to have a peer-to-peer conversation with the second user, i.e., the speaker or the known contact.

At operation 308, the first device may send the request to a first mobile device associated with the first user. The operation 308 may be similarly performed by the controller of the first device. The first mobile device may correspond to the user equipment 108(1), as shown in FIG. 1 and FIG. 2.

In examples, the first device may be paired to the first mobile device. The request generated by the first device may be synchronized to the mobile device of the first user. In another examples, generating the request may trigger a connection/pair request from the first device to the first mobile device. Once the first device is connected to the first mobile device, the request may be automatically synchronized to the first mobile device. In implementations, a peer-to-peer conversation app installed in the first mobile device may be activated to receive the request.

At operation 310, the first mobile device may send the request to the second device associated with a second mobile device. The second device may correspond to the device 106(2) and the second mobile device may correspond to the user equipment 108(2), as shown in FIG. 1 and FIG. 2.

As discussed herein, the second device may also include a wearable device, or an electronic device integrated to wearable materials. The second device may be automatically connected to the second mobile device when the second mobile device is within a communication range. In examples, the request for peer-to-peer voice conversation may be received at both the second device and the second mobile device when the second device and the second mobile device are paired to each other.

At operation 312, the first device may determine whether an acknowledge signal is received from the second device or the second mobile device. As discussed herein, the second device may be paired with the second mobile device. The acknowledge signal may be generated from either of the second device or the second mobile device.

If the acknowledge signal is received from the second device or the second mobile device, at operation 314, the first mobile device may establish the communication channel between the first device and the second device through the first mobile device. In examples, the first device and the second device may connect to the first mobile device through the Bluetooth connection or any other short range wireless connections.

If the acknowledge signal is not received from the second device and the second mobile device, at operation 316, the first mobile device may send a response to the first device without establishing the communication channel.

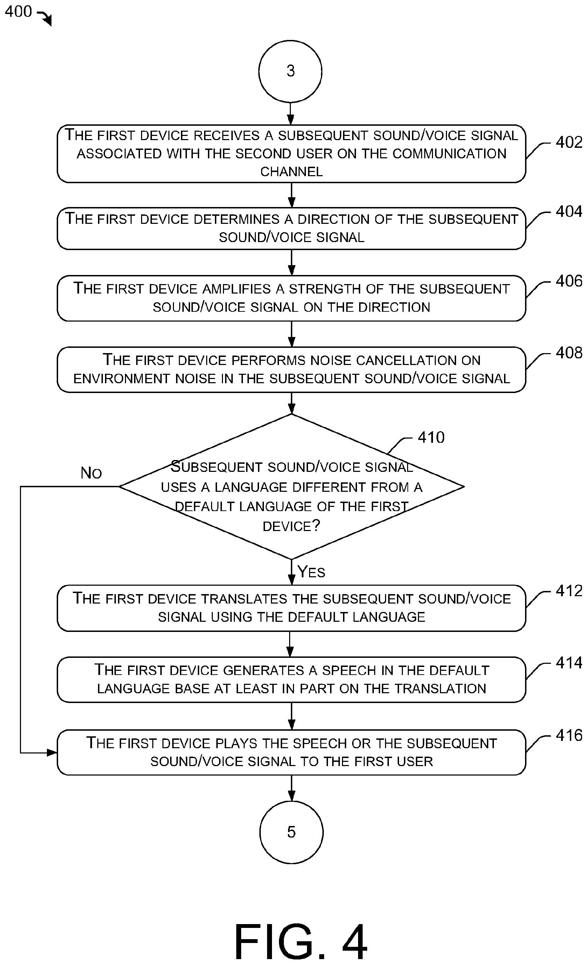

FIG. 4 illustrates an example flowchart 400 for implementing an enhanced peer-to-peer voice conversation according to another example of the present disclosure. The example flowchart 400 may correspond to a scenario, in which, a peer-to-peer voice conversation is carried on a private communication channel that is established between the first device and the second device by performing the operations of FIG. 3.

At operation 402, the first device may receive a subsequent sound/voice signal associated with the second user on the communication channel. As discussed herein, the first user and the second user are present in the environment and attempt to have a voice conversation with each other. In some examples, once the communication channel is established between the first device and the second device, the subsequent sound/voice signal associated with the second user may be transmitted from the second device through the communication channel to the first device. In some examples, the subsequent sound/voice signal may be compressed and/or encrypted to be transmitted through the communication channel.

At operation 404, the first device may determine a direction of the subsequent sound/voice signal. The operation 404 may be performed by the microphone array of the first device, e.g., the microphone array 202 shown in FIG. 2. In some examples, as the first user and the second user are present in the environment in an eyesight range of each other, the first user may adjust his/her position such that the conversation can be in a focused direction. In another example, the first device may estimate the direction of the sound/voice signal source (e.g., the second user) from the first device using any time difference of arrival (TDOA)-based algorithm. The microphone array of the first device, e.g., a directional microphone array, may pick up the sound/voice signal in the estimated direction.

At operation 406, the first device may amplify a strength of the subsequent sound/voice signal on the direction. Once the direction of the acoustic source is determined, the first device may amplify the strength of the subsequent sound/voice signal on the direction using an amplifier. In implementations, the amplifier may be integrated to the DSP/NΠ, module 206, as shown in FIG. 2.

At operation 408, the first device may perform noise cancellation on ambient noise in the subsequent sound/voice signal. The operation 408 may be performed by the DSP/ML module 206, as shown in FIG. 2. In implementations, the first device may use various filters such as, low-pass filers, high-pass filters, band-pass filters, etc., to filter the noise from the subsequent sound/voice signal. In some examples, the first device may use a machine learning module for noise cancellation. The machine learning module may be trained to learn different patterns of ambient noise, and thus, may remove the noise more efficiently.

At operation 410, the first device may determine the subsequent sound/voice signal uses a language different from a default language of the first device. In some circumstances, the second user may speak a different language from the first user. When the subsequent sound/voice signal uses a language different from a default language of the first device, at operation 412, the first device may translate the subsequent sound/voice signal using the default language. In implementations, the operation 412 may be performed by the DSP/ML module 206, as shown in FIG. 2.

When the subsequent sound/voice signal uses a same language as the default language of the first device, at operation 414, the first device may generate speech in the default language based at least in part on the translation. In some examples, the operation 414 may further include steps of automatic speech recognition, machine translation, and voice synthesis. In implementations, the operation 414 may be performed by the DSP/ML module. At operation 416, the first device may play the speech or the subsequent sound/voice signal to the first user. In implementations, the operation 416 may be performed by the speaker 210, as shown in FIG. 2. Additionally, or alternatively, the speaker of the first device, e.g., a directional speaker, may play the speech or the subsequent sound/voice signal from the estimated direction.

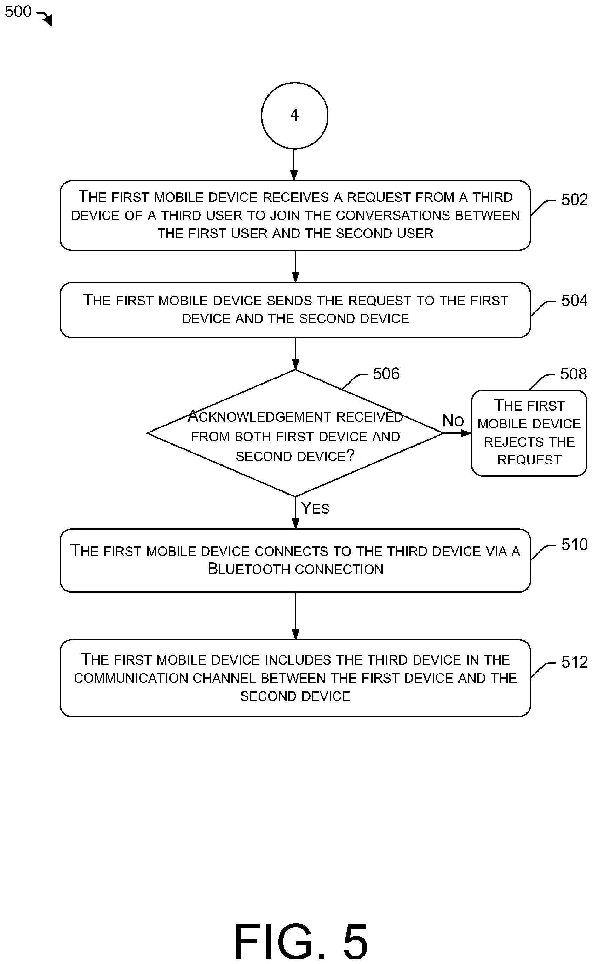

FIG. 5 illustrates an example flowchart 500 for implementing an enhanced peer-to-peer voice conversation according to yet another example of the present disclosure. The example flowchart 500 may correspond to a scenario, in which, a third user wants to join the peer-to-peer voice conversation after the private communication channel is established following the operations of FIG. 3 and FIG. 4.

At operation 502, the first mobile device may receive a request from a third device of a third user to join the conversations between the first user and the second user. In implementations, the third device may request to pair to the first mobile device along with the request to join the conversation.

At operation 504, the first mobile device may send the request to join the conversation to the first device and the second device. In implementations, the request to join the conversation may be sent to the first device and the second device through the peer-to-peer conversation app installed on the first mobile device.

At operation 506, the first device may determine whether an acknowledgement is received from both the first device and the second device. When the request to join the conversation is not agreed by both the first user and the second user, at operation 508, the first device may reject the request to join the conversation. When the request to join the conversation is agreed by both the first user and the second user, an acknowledgement is received from both the first device and the second device.

At operation 510, the first mobile device may connect to the third device via a Bluetooth connection. As discussed herein, the first mobile device may also connect to the third device via other wireless access techniques such as Wi-Fi, 5G, etc.

At operation 512, the first mobile device may include the third device in the communication channel established between the first device and the second device.

In implementations, the operations of 502-512 may be performed by the controller 212 of the device 106(1), as shown in FIG. 2.

As discussed herein, in the scenario where multiple users join the communication channel, the subsequent voice signals transmitted through the communication channel may be processed similarly to the process described with respect to FIG. 4, and therefore, is not detailed herein. In addition, although the example flowchart 300, the example flowchart 400, and the example flowchart 500 are depicted as including a number of operations and/or an apparent flow of operations, the example flowcharts 300-500 may each include more or less operations, repeat operations, and/or one or more of the operations may be conducted serially, in parallel, and/or in a different order than that shown in the figures.

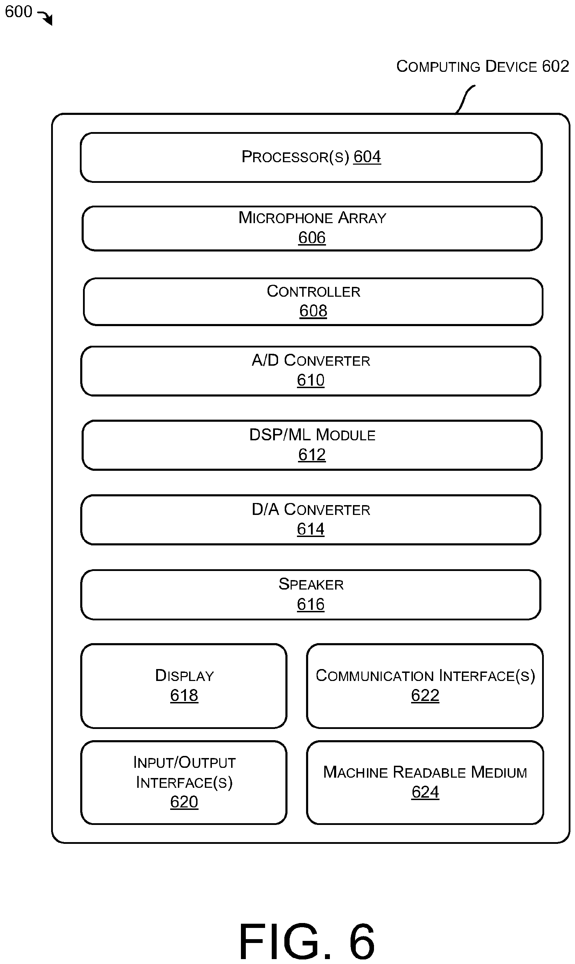

FIG. 6 illustrates an example computing device 600, in which methods for enhanced peer-to-peer voice conversation are implemented according to an example of the present disclosure. The computing device 600 may correspond to the user equipment 106(1) or 106(2), as illustrated in FIG. 1 and FIG. 2.

As illustrated in FIG. 6, a computing device 602 may comprise processor(s) 604, a microphone array 606, a controller 608, an A/D converter 610, a DSP/NΠ, module 612, a D/A converter 614, a speaker 616, a display 618, input/output interface(s) 620, communication interface(s) 622, and a machine readable medium 624. In some examples, the computing device 602 may further include a battery.

In various examples, the processor(s) 604 can be a central processing unit (CPU), a graphics processing unit (GPU), or both CPU and GPU, or any other type of processing unit. Each of the one or more processor(s) 604 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 604 may be coupled to other functional elements of the computing device 602 and may be responsible for executing those functional elements.

The microphone array 606 may be configured to detect the acoustic signals in the environment. The microphone array 606 may be capable of transducing the acoustic signals, generally, the sound wave or vibrations, to an electric signal (e.g., an analog signal). In examples, the microphone array 606 may be configured to locate the acoustic source in the environment using the time difference of arrival (TDOA) based algorithms. Once the acoustic source is located, the microphone array 606 may extract the voice signal from the received acoustic signal using beamforming. In some examples, the microphone array 606 may be integrated with a machine learning module for noise cancellation. The microphone array 606 may include a plurality of directional microphones. In some examples, the microphone array 606 may be a linear microphone array such as, an additive microphone array (AMA) or a differential microphone array (DMA).

The controller 608 may be configured to process the request establish a peer-to-peer communication channel and the request to join a peer-to-peer communication channel. The controller 608 may facilitate the communication between the first device or the second device and a mobile device, e.g., a hub of the peer-to-peer voice communication. For example, the controller 608 may be establish the peer-to-peer communication channel through a Bluetooth connection, a Wi-Fi connection, or a 5G connection.

The A/D converter 610 may be configured to convert the analog voice signal to a digital voice signal to be processed by the DSP/ML module 612.

The DSP/ML module 612 may be configured to perform a variety of signal processing operations on the digital voice signal. For instance, the DSP/NΠ, module 612 may amplify the strength of the digital voice signal on an estimated frequency. In another example, the DSP/NΠ, module 612 may use a machine learning module to perform noise cancellation on the digital voice signal. In yet another example, the DSP/ML module 612 may use another machine learning module to perform voice recognition to determine whether the speaker is known to the first user. In yet another example, the DSP/ML module 612 may perform language translation for the digital voice signal such that the language matches the default setting of the first user. The DSP/ML module 612 may perform machine translation on the digital voice signal and generate a synthesized speech in the language spoken by the first user.

The D/A converter 614 may be configured to convert the digital voice signal to the analog voice signal.

The speaker 616 may further transform the analog voice signal to a sound signal and play the sound signal for the first user. In examples, the speaker 616 may include one or more directional speakers to play the sound signal in certain frequencies.

The communication interface(s) 622 can include transceivers, modems, interfaces, antennas, and/or other components that perform or assist in exchanging radio frequency (RF) communications with base stations of the telecommunication network, a Wi-Fi access point, a Bluetooth access point, a UWB access point, a Zigbee access point, and/or otherwise implement connections with one or more networks. For example, the communication interface(s) 622 can be compatible with multiple radio access technologies, such as 5G radio access technologies and 4G/LTE radio access technologies. Accordingly, the communication interfaces 622 can allow the computing device 602 to connect to the 5G system described herein.

Display 618 be a liquid crystal display or any other type of display commonly used in the computing device 602. For example, display 618 may be a touch-sensitive display screen and can then also act as an input device or keypad, such as for providing a soft-key keyboard, navigation buttons, or any other type of input. Input/output interface(s) 620 can include any sort of output devices known in the art, such as display 618, speakers, a vibrating mechanism, and/or a tactile feedback mechanism. Input/output interface(s) 620 can also include ports for one or more peripheral devices, such as headphones, peripheral speakers, and/or a peripheral display. Input/output interface(s) 620 may include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

The machine readable medium 624 can store one or more sets of instructions, such as software or firmware, that embodies any one or more of the methodologies or functions described herein. The instructions can also reside, completely or at least partially, within a memory, processor(s) 604, the microphone array 606, the controller 608, the A/D converter 610, the DSP/NΠ, module 612, the D/A converter 614, the speaker 616, and/or communication interface(s) 622 during execution thereof by the computing device 602. The memory and the processor(s) 604 also can constitute machine readable media 624. In various examples, the memory can include system memory, which may be volatile (such as RAM), non-volatile (such as ROM, flash memory, etc.) or some combination of the two. The memory can further include non-transitory computer-readable media, such as volatile and nonvolatile, removable, and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store desired information and which can be accessed by the computing device 602. Any such non-transitory computer-readable media may be part of the computing device 602.

The various techniques described herein may be implemented in the context of computer-executable instructions or software, such as program modules, that are stored in computer-readable storage and executed by the processor(s) of one or more computing devices such as those illustrated in the figures. Generally, program modules include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, not limited to the forms of memory that are specifically described.

### CONCLUSION

Although the subject matter has been described in language specific to structural features and/or methodological acts, it is to be understood that the subject matter is not necessarily limited to the specific features or acts described above. Rather, the specific features and acts described above are disclosed as example examples.

While one or more examples of the techniques described herein have been described, various alterations, additions, permutations, and equivalents thereof are included within the scope of the techniques described herein.

In the description of examples, reference is made to the accompanying drawings that form a part hereof, which show by way of illustration specific examples of the claimed subject matter. It is to be understood that other examples can be used and that changes or alterations, such as structural changes, can be made. Such examples, changes or alterations are not necessarily departures from the scope with respect to the intended claimed subject matter. While the steps herein can be presented in a certain order, in some cases the ordering can be changed so that certain inputs are provided at different times or in a different order without changing the function of the systems and methods described. The disclosed procedures could also be executed in different orders. Additionally, various computations that are herein need not be performed in the order disclosed, and other examples using alternative orderings of the computations could be readily implemented. In addition to being reordered, the computations could also be decomposed into sub-computations with the same results.

Aspects of the present disclosure also reside in the following numbered clauses:
Clause 1. A computer-implemented method comprising:
   detecting, by a first device of a first user, audio signal in an environment, the audio signal being associated with a second user;
   initiating, from the first device, a request for establishing a communication channel between the first device and a second device associated with the second user; and
   upon receiving an acknowledging signal from the second device, establishing, by the first device, the communication channel between the first device and the second device.
Clause 2. The computer-implemented method of clause 1, further comprising:
   determining, by the first device, the second user being a known contact of the first user, including:
   inputting the audio signal to a machine learning model trained to perform voice recognition, and
   receiving an output from the machine learning model, the output indicating the audio signal being generated by the known contact.
Clause 3. The computer-implemented method of clause 2, wherein the machine learning model is implemented on the first device.
Clause 4. The computer-implemented method of clause 2, further comprising downloading the machine learning model from a server, the machine learning model being trained by performing actions including:
   collecting voice data from past voice conversations with the first user;
   building a set of training data based at least in part on one or more characteristics of the voice data;
   labeling the set of training data based at least in part on identities of people involved in the past voice conversations; and
   training the machine learning model based at least in part on the labeled set of training data.
Clause 5. The computer-implemented method of clause 1, wherein initiating, from the first device, the request for establishing the communication channel further comprises:
   sending an instruction to a first mobile device associated with the first device, causing the first mobile device to perform actions including:
   sending the request for establishing the communication channel to the second device;
   receiving the acknowledging signal from the second device, and
   establishing, via the first mobile device, the communication channel between the first device and the second device through the first mobile device.
Clause 6. The computer-implemented method of clause 5, wherein the communication channel includes a first Bluetooth channel that connects the first device to the first mobile device and a second Bluetooth channel that connects the second device to the first mobile device.
Clause 7. The computer-implemented method of clause 5, further comprising: receiving a subsequent speech audio signal generated by the second user on the communication channel;
   determining a direction of a subsequent speech audio signal;
   amplifying, based at least in part on the direction, a strength of the subsequent speech audio signal;
   performing noise cancellation on environmental noise in the subsequent speech audio signal; and
   playing the subsequent speech audio signal to the first user.
Clause 8. The computer-implemented method of clause 7, wherein at least one of the first device or the second device is implemented by at least one of a wearable device or a wearable material.
Clause 9. The computer-implemented method of clause 7, further comprising: determining that the subsequent speech audio signal uses a language different from a preset language in the first device;
   translating the subsequent speech audio signal using the preset language;
   generating speech in the preset language based at least in part on the translation; and playing the speech to the first user through the first device.
Clause 10. A first device associated with a first user comprising:
   a processor,
   a memory,
   a network interface,
   a microphone array configured to detect an audio signal in an environment, the audio signal being associated with a second user;
   a controller configured to:
      initiate a request for establishing a communication channel between the first device and
      a second device associated with the second user, and
      upon receiving an acknowledging signal from the second hearing device, establishing the communication channel between the first device and the second device.
Clause 11. The first device of clause 10, wherein the controller is further configured to determine the second user being a known contact of the first user, including: inputting the audio signal to a machine learning model trained to perform voice recognition, and
   receiving an output from the machine learning model, the output indicating the audio signal being generated by the known contact.
Clause 12. The first device of clause 11, wherein the machine learning model is implemented on the first device.
Clause 13. The first device of clause 11, wherein the controller is further configured to download the machine learning model from a server, the machine learning model being trained by performing actions including:
   collecting voice data from past voice conversations with the first user;
   building a set of training data based at least in part on one or more characteristics of the voice data;
   labeling the set of training data based at least in part on identities of people involved in the past voice conversations; and
   training the machine learning model based at least in part on the labeled set of training data.
Clause 14. The first device of clause 10, wherein the controller is further configured to:
   send an instruction to a first mobile device associated with the first device, causing the first mobile device to perform actions including:
   sending the request for establishing the communication channel to the second device;
   receiving the acknowledging signal from the second device, and
   establishing the communication channel between the first device and the second device through the first mobile device.
Clause 15. The first device of clause 14, wherein the communication channel includes a first Bluetooth channel that connects the first device to the first mobile device and a second Bluetooth channel that connects the second device to the first mobile device.
Clause 16. The first device of clause 14, further comprising:
   a digital signal processing (DSP) module configured to perform actions including:
   receiving a subsequent speech audio signal generated by the second user on the communication channel;
   determining the direction of a subsequent speech audio signal;
   amplifying, based at least in part on the direction, strength of the subsequent speech audio signal; and
   performing noise reduction on environmental noise in the subsequent speech audio signal; and
   a speaker configured to play the subsequent speech audio signal to the first user.
Clause 17. The first device of clause 16, wherein at least one of the first device or the second device is implemented by at least one of a wearable device or a wearable material.
Clause 18. The first device of clause 16, further comprising a translation module configured to perform actions including:
   determining that the subsequent audio speech signal uses a language different from a preset language in the first device;
   translating the subsequent speech audio signal using the preset language;
   generating speech in the preset language based at least in part on the translation.
Clause 19. A computer-readable storage medium storing computer-readable instructions, that when executed by a processor, cause the processor to perform actions comprising:
   detecting, by a first device of a first user, audio signal in an environment, the audio signal being associated with a second user;
   initiating, from the first device, a request for establishing a communication channel between the first device and a second device associated with the second user, and upon receiving an acknowledging signal from the second hearing device, establishing the communication channel between the first device and the second device.
Clause 20. The computer-readable storage medium of clause 19, wherein initiating, from the first device, the request for establishing a communication channel further comprises:
   sending an instruction to a first mobile device associated with the first device, causing the first mobile device to perform actions including:
   sending the request for establishing a communication channel to the second device;
   receiving the acknowledging signal from the second device, and
   establishing, via the first mobile device, the communication channel between the first device and the second device through the first mobile device,
   wherein the communication channel includes a first Bluetooth channel that connects the first device to the first mobile device and a second Bluetooth channel that connects the second device to the first mobile device.

## Claims

1. A computer-implemented method comprising:
detecting, by a first device of a first user, audio signal in an environment, the audio signal being associated with a second user;
initiating, from the first device, a request for establishing a communication channel between the first device and a second device associated with the second user; and
upon receiving an acknowledging signal from the second device, establishing, by the first device, the communication channel between the first device and the second device.

2. The computer-implemented method of claim 1, further comprising:
determining, by the first device, the second user being a known contact of the first user, including:
inputting the audio signal to a machine learning model trained to perform voice recognition, and
receiving an output from the machine learning model, the output indicating the audio signal being generated by the known contact.

3. The computer-implemented method of claim 2, wherein the machine learning model is implemented on the first device.

4. The computer-implemented method of claim 2, further comprising downloading the machine learning model from a server, the machine learning model being trained by performing actions including:
collecting voice data from past voice conversations with the first user;
building a set of training data based at least in part on one or more characteristics of the voice data;
labeling the set of training data based at least in part on identities of people involved in the past voice conversations; and
training the machine learning model based at least in part on the labeled set of training data.

5. The computer-implemented method of claim 1, wherein initiating, from the first device, the request for establishing the communication channel further comprises:
sending an instruction to a first mobile device associated with the first device, causing the first mobile device to perform actions including:
sending the request for establishing the communication channel to the second device;
receiving the acknowledging signal from the second device, and
establishing, via the first mobile device, the communication channel between the first device and the second device through the first mobile device.

6. The computer-implemented method of claim 5, further comprising:
receiving a subsequent speech audio signal generated by the second user on the communication channel;
determining a direction of a subsequent speech audio signal;
amplifying, based at least in part on the direction, a strength of the subsequent speech audio signal;
performing noise cancellation on environmental noise in the subsequent speech audio signal; and
playing the subsequent speech audio signal to the first user.

7. The computer-implemented method of claim 6, further comprising:
determining that the subsequent speech audio signal uses a language different from a preset language in the first device;
translating the subsequent speech audio signal using the preset language;
generating speech in the preset language based at least in part on the translation; and
playing the speech to the first user through the first device.

8. A first device associated with a first user comprising:
a processor,
a memory,
a network interface,
a microphone array configured to detect an audio signal in an environment, the audio signal being associated with a second user;
a controller configured to:
initiate a request for establishing a communication channel between the first device and a second device associated with the second user, and
upon receiving an acknowledging signal from the second hearing device, establishing the communication channel between the first device and the second device.

9. The first device of claim 8, wherein the controller is further configured to determine the second user being a known contact of the first user, including:
inputting the audio signal to a machine learning model trained to perform voice recognition, and
receiving an output from the machine learning model, the output indicating the audio signal being generated by the known contact.

10. The first device of claim 9, wherein the machine learning model is implemented on the first device.

11. The first device of claim 9, wherein the controller is further configured to download the machine learning model from a server, the machine learning model being trained by performing actions including:
collecting voice data from past voice conversations with the first user;
building a set of training data based at least in part on one or more characteristics of the voice data;
labeling the set of training data based at least in part on identities of people involved in the past voice conversations; and
training the machine learning model based at least in part on the labeled set of training data.

12. The first device of claim 8, wherein the controller is further configured to:
send an instruction to a first mobile device associated with the first device, causing the first mobile device to perform actions including:
sending the request for establishing the communication channel to the second device;
receiving the acknowledging signal from the second device, and
establishing the communication channel between the first device and the second device through the first mobile device.

13. The first device of claim 12, further comprising:
a digital signal processing (DSP) module configured to perform actions including:
receiving a subsequent speech audio signal generated by the second user on the communication channel;
determining the direction of a subsequent speech audio signal;
amplifying, based at least in part on the direction, strength of the subsequent speech audio signal; and
performing noise reduction on environmental noise in the subsequent speech audio signal; and
a speaker configured to play the subsequent speech audio signal to the first user.

14. The first device of claim 13, further comprising a translation module configured to perform actions including:
determining that the subsequent audio speech signal uses a language different from a preset language in the first device;
translating the subsequent speech audio signal using the preset language;
generating speech in the preset language based at least in part on the translation.

15. A computer-readable storage medium storing computer-readable instructions, that when executed by a processor, cause the processor to perform the method of claim 1 or claim 5.
